# EUROPÄISCHE PATENTSCHRIFT

(11) **EP 0 689 965 B1**
(45) Veröffentlichungstag und Bekanntmachung des Hinweises auf die Patenterteilung: **30.07.1997**
(21) Anmeldenummer: 95102851.3
(22) Anmeldetag: 01.03.1995
(51) Int. Cl.: B60R 9/04

(54) **Dachreling für Fahrzeuge**
Rails for a vehicle roof
Rails de toit pour véhicules

(30) Priorität: 29.06.1994 DE 4422421
(43) Veröffentlichungstag der Anmeldung: 03.01.1996
(73) Patentinhaber: Happich Fahrzeug-Dachsysteme GmbH, D-42285 Wuppertal (DE)
(72) Erfinder: Mohr, Edgar, D-52223 Stolberg (DE); Evels, Brigitte, D-42119 Wuppertal (DE)

(56) Entgegenhaltungen:
- EP-A- 0 580 023
- EP-A- 0 633 166
- US-A- 5 069 377

## Beschreibung

Die Erfindung bezieht sich auf eine Dachreling für Fahrzeuge mit einem sich in einem Abstand und im wesentlichen parallel zur Dachfläche längs eines seitlichen Dachrahmens erstreckenden rohrförmigen Holm.

Eine Dachreling der gattungsgemäßen Art ist z.B. in der DE-A- 40 04 829 gezeigt. Wie sich aus dieser Druckschrift ergibt, besteht eine Dachreling üblicherweise aus einem Holm an jeder Dachseite und mindestens zwei jeweils einen Holm tragenden Stützfüßen. Die Stützfüße sind in der Regel als aufwendig zu bearbeitende Metallgußteile ausgeführt mit in die Holmenden eingreifenden Zapfen. Diese Zapfen sind wegen der in der Praxis nicht zu vermeidenden Spaltbildung zum Holm optisch störend und bilden die Belastbarkeit der Dachreling schwächende Übergänge.

Es ist daher ausgehend von einer Dachreling der eingangs genannten Art Aufgabe der vorliegenden Erfindung, insoweit Abhilfe zu schaffen und eine Dachreling zur Verfügung zu stellen, die bei einfacher und kostengünstiger Herstellbarkeit ohne eine Zapfenverbindung zwischen den Stützfüßen und dem Holm auskommt und die eine hohe Belastbarkeit und insbesondere auch ein formschönes Aussehen aufweisen soll.

Gemäß der Erfindung ist zur Lösung dieser Aufgabe vorgesehen, daß der Holm an den Endbereichen mit jeweils einer Abbiegung ausgebildet ist und freie Enden aufweist, die planparallel zur Dachfläche verlaufen, daß in jedes freie Holmende ein sich auf der Innenwandung des Holms abstützendes Einsatzelement eingebracht ist, an dem unter Einspannung der Holmwandung ein Adapterelement mittels die Holmwandung durchsetzender Befestigungselemente befestigt ist, daß das Adapterelement mit Gewindebolzen zum Befestigen der Dachreling am Fahrzeugdach bestückt ist und daß das freie Holmende von einer Abdeckkappe umgriffen ist, die sich um das Adapterelement herum und im wesentlichen über den Abbiegungsbereich des Holms erstreckt.

Durch die erfindungsgemäßen Maßnahmen ergeben sich eine besonders einfache Herstellung, eine besonders hohe Festigkeit, da schwächende Übergänge eleminiert werden konnten und vorteilhafterweise eine stilistische Freiheit in der Gestaltung der Abdeckkappe. Für die Einsatzelemente, Adapterelemente und Abdeckkappen ergibt sich zudem eine werkzeugfallende Fertigung.

Vorteilhafte Ausgestaltungen und zweckmäßige Weiterbildungen der Erfindung sind in den Unteransprüchen angegeben.

Ein Ausführungsbeispiel der Erfindung wird im folgenden anhand der Zeichnung näher erläutert, und es zeigen:

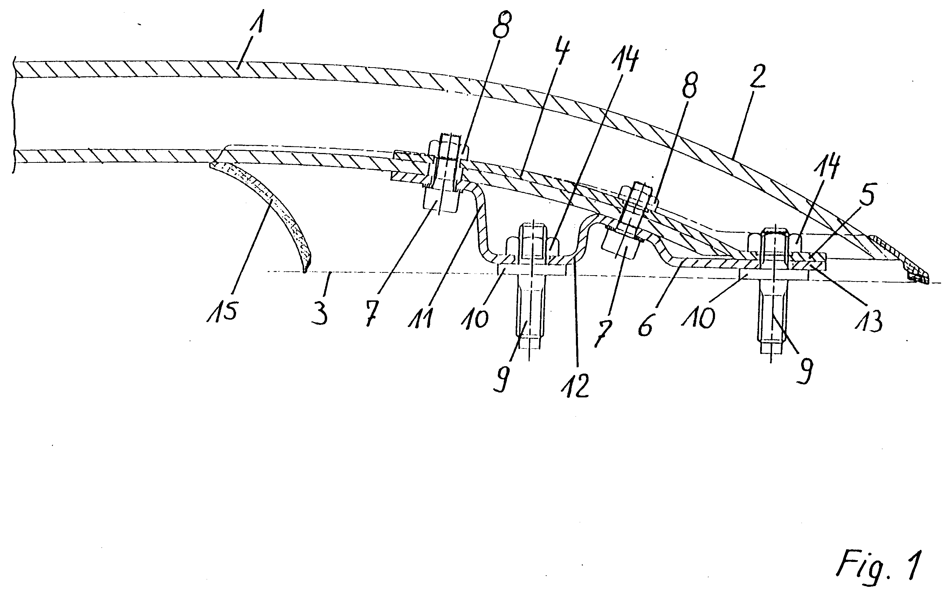

- Fig. 1: einen stützfußseitigen Endbereich der Dachreling im Längsschnitt und

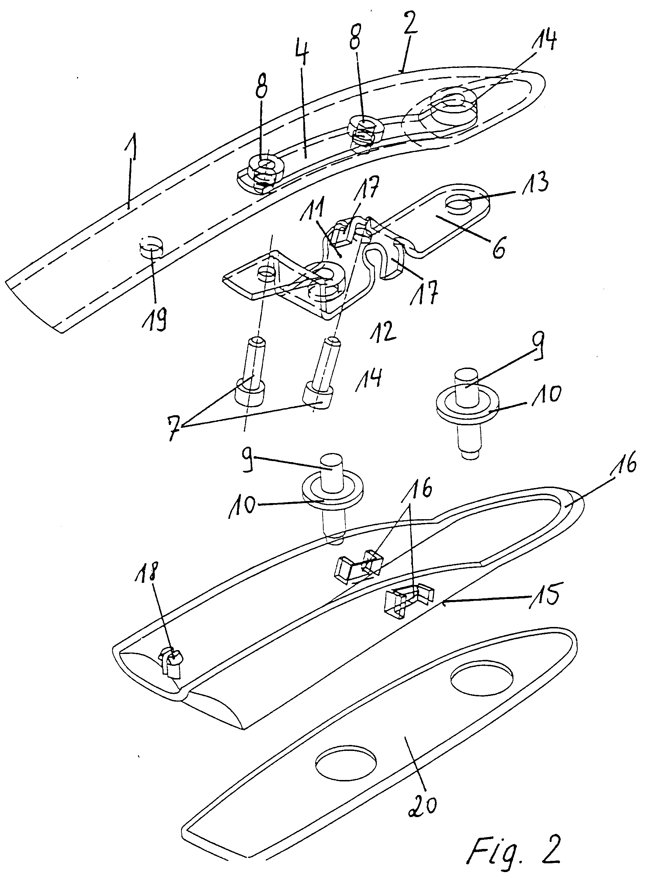

- Fig. 2: eine Explosivdarstellung des Dachrelingendbereichs nach Fig. 1.

Die neue Dachreling wird aus einem Abschnitt eines rohrförmigen Strangpreßprofils gebildet und besteht im wesentlichen aus einem Holm 1, dessen beide Endbereiche (von denen nur einer gezeigt ist) jeweils mit einer Abbiegung 2 ausgebildet sind. Die freien Enden des Holms 1 bzw. der Abbiegung 2 sind so bearbeitet, daß sie planparallel zur Dachfläche 3 eines nicht dargestellten Fahrzeugs verlaufen.

In das offene Holmende ist ein sich auf der Innenwandung des Holms 1 abstützendes Einsatzelement 4 eingeschoben, das durch eine Biegeoperation dem Krümmungsverlauf der Abbiegung 2 angepaßt ist. Das zweckmäßigerweise aus einem Bandstahlabschnitt bestehende Einsatzelement 4 ist ferner in Anpassung an den Holmmantel hohlrund ausgebildet und weist zudem einen abgewinkelten Endbereich 5 auf, der sich in das offene Holmende hinein erstreckt und parallel zur Dachfläche 3 verlaufend ausgerichtet ist. Das Einsatzelement 4 dient der zuverlässigen Festlegung eines den Holm 1 im Bereich der Abbiegung 2 untergreifenden Adapterelements 6, welches daran mittels Befestigungselementen, vorzugsweise Schrauben 7, die Bohrungen in der Holmwandung durchsetzen, festgelegt ist. Zum Eindrehen der Schrauben ist das Einsatzelement 4 mit Schweißmuttern 8 oder mit Innengewinde aufweisenden Lochdurchzügen versehen.

Das Adapterelement 6 trägt Gewindebolzen 9 zum Befestigen der Dachreling auf einem Fahrzeugdach. Jeder Gewindebolzen 9 weist einen oberen und einen unteren Gewindeschaft sowie einen Stützflansch 10 zwischen diesen auf. Das aus einem Blechbiegeteil bestehende Adapterelement 6 weist eine U-förmige Einziehung 11 mit einem zur Dachfläche 3 gerichteten Boden 12 und ferner einen abgewinkelten Endbereich 13 auf, der vom Endbereich 5 des Einsatzelementes 4 überlappt wird. Aus dem Boden 12 der Einziehung 11 und auf dem Endbereich 5 des Einsatzelements sind Schweißmuttern 14 befestigt, so daß die Gewindebolzen 9 mit ihrem oberen Gewindeschaft durch Bohrungen im Boden 12 und in den Endbereichen 5 und 13 hindurch in die Schweißmuttern 14 eingedreht werden können. Für den oberen Gewindeschaft der Gewindbolzen 9 ist somit eine genügend große Kopffreiheit gegeben. Es ist auch, wenn hinsichtlich der Handhabung etwas umständlicher möglich, lose Gewindemuttern einzusetzen oder ggf. mit Nietkopfschrauben zu arbeiten, was auch für die Schrauben 7 gilt.

Ein ästhetisch ansprechender Abschluß an den Holmenden wird jeweils durch eine Abdeckkappe 15 erzielt, und zwar jeweils im stilistischen Nachempfinden eines Reling-Stützfußes. Die Abdeckkappe 15 ist zweckmäßigerweise als Kunststoff-Spritzgußteil ausgebildet und kann aus farbigem Kunststoff bestehen oder auch z.B. in Anpassung an die jeweilige Fahrzeugfarbe lackiert sein. Die Abdeckkappe 15 umgreift den freien Holmendbereich und erstreckt sich um das Adapterelement 6 herum und im wesentlichen über den Abbiegungsbereich 2 des Holms 1. Die Abdeckkappe 15 besitzt einen hochgezogenen Kragen 16, wodurch das Holmende umgriffen wird, so daß ein etwaiger Spalt zwischen dem Holmende und der Dachfläche 3 zuverlässig überdeckt wird. Zur Festlegung der Abdeckkappe 15 sind kraft- und/oder formschlüssige Verbindungsmittel vorgesehen. Im Ausführungsbeispiel dienen an den Innenwandungen der Abdeckkappe angeformte Aufnahmetaschen 16 zur kraftschlüssigen Steckaufnahme von am Adapterelement 6 ausgebildeten Materiallappen 17 und ein angeformter Klipszapfen 18, der in eine Bohrung 19 im Holm 1 einzurasten vermag, zur besonders schnellen, einfachen wie auch zuverlässigen Festlegung der Abdeckkappe 15.

Der Holm 1 mit den endseitigen Abbiegungen 2 wird vor der Anlieferung mit dem Einsatzelement und dem Adapterelement 6 verschraubt. Alsdann werden die Gewindebolzen 9 zur Befestigung am Fahrzeugdach eingeschraubt. Die Abdeckkappe 15 wird am Adapterelement 6 befestigt und in der Bohrung 19 im Holm 1 mittels des Klipszapfens 18 verklipst. Nach dem Überziehen einer Unterlage 20 kann die so gebildete Baueinheit auf dem Fahrzeugdach über die Gewindebolzen 9 befestigt werden.

## Patentansprüche

1. Dachreling für Fahrzeuge mit einem sich in einem Abstand und im wesentlichen parallel zur Dachfläche längs eines seitlichen Dachrahmens erstreckenden rohrförmigen Holm (1), dadurch gekennzeichnet, daß der Holm (1) an den Endbereichen mit jeweils einer Abbiegung (2) ausgebildet ist und freie Enden aufweist, die planparallel zur Dachfläche (3) verlaufen, daß in jedes freie Holmende ein sich auf der Innenwandung des Holms (1) abstützendes Einsatzelement (4) eingebracht ist, an dem unter Einspannung der Holmwandung ein Adapterelement (6) mittels die Holmwandung durchsetzender Befestigungselemente (7) befestigt ist, daß das Adapterelement (6) mit Gewindebolzen (9) zum Befestigen der Dachreling am Fahrzeugdach bestückt ist und daß das freie Holmende von einer Abdeckkappe (15) umgriffen ist, die sich um das Adapterelement (6) herum und im wesentlichen über den Abbiegungsbereich (2) des Holms (1) erstreckt.

2. Dachreling nach Anspruch 1, dadurch gekennzeichnet, daß sich in den offenen Holmenden jeweils ein Endbereich (5) eines Einsatzelements (4) und ein Endbereich eines Adapterelements (6) in einander überlappender Anordnung treffen und daß im Überlappungsbereich einer der zum Befestigen der Dachreling vorgesehenen Gewindebolzen (9) angeordnet und daran mittels einer Gewindemutter (14) festgelegt ist.

3. Dachreling nach Anspruch 1 oder 2, dadurch gekennzeichnet, daß das Adapterelement (6) eine etwa U-förmige Einziehung (11) mit einem zur Dachfläche (3) gerichteten Boden (12) aufweist, der mit dem im offenen Holmende mündenden Endbereich (13) desselben auf gleicher Höhe liegt und einen der zum Befestigen der Dachreling dienenden Gewindebolzen (9) trägt.

4. Dachreling nach mindestens einem der Ansprüche 1 bis 3, dadurch gekennzeichnet, daß das Einsatzelement (4) ebenso wie das Adapterelement (6) als Blechbiegeteil ausgebildet ist.

5. Dachreling nach mindestens einem der Ansprüche 1 bis 4, dadurch gekennzeichnet, daß am Adapterelement (6) Führungsvorsprünge oder Führungsaufnahmen (16) für entsprechende Gegenausbildungen an der Abdeckkappe (15) angeordnet sind.

6. Dachreling nach mindestens einem der Ansprüche 1 bis 5, dadurch gekennzeichnet, daß die Abdeckkappe (15) als Kunststoff-Spritzgußteil ausgebildet ist.

7. Dachreling nach mindestens einem der Ansprüche 1 bis 6, dadurch gekennzeichnet, daß die Abdeckkappe (15) einen angeformten, in eine im Holm (1) vorgesehene Bohrung (19) einklipsbaren Klipszapfen (18) aufweist.

## Claims

1. Roof rails for vehicles having a tubular strut (1) extending at a distance from, and essentially parallel to, the roof surface along a lateral roof frame, characterized in that the strut (1) is designed at the end regions with a bent portion (2) in each case and has free ends which run plane-parallel to the roof surface (3), in that placed in each free strut end is an insert element (4) which is supported on the inner wall of the strut (1) and on which an adaptor element (6) is fastened, gripping the strut wall, by means of fastening elements (7) which pass through the strut wall, in that the adaptor element (6) is fitted with threaded bolts (9) for fastening the roof rails on the vehicle roof, and in that the free strut end is embraced by a covering cap (15) which extends around the adaptor element (6) and essentially over the bent-portion region (2) of the strut (1).

2. Roof rails according to Claim 1, characterized in that in the open strut ends in each case an end region (5) of an insert element (4) and an end region of an adaptor element (6) meet in an overlapping arrangement, and in that in the overlapping region one of the threaded bolts (9) provided for fastening the roof rails is arranged and is secured thereon by means of a threaded nut (14).

3. Roof rails according to Claim 1 or 2, characterized in that the adaptor element (6) has an approximately U-shaped recess (11) with a base (12) which is directed towards the roof surface (3), lies at the same level as that end region (13) thereof which opens into the open strut end and bears one of the threaded bolts (9) used for fastening the roof rails.

4. Roof rails according to at least one of Claims 1 to 3, characterized in that the insert element (4) is designed as a bent sheet-metal part, as is the adaptor element (6).

5. Roof rails according to at least one of Claims 1 to 4, characterized in that there are arranged on the adaptor element (6) guide projections or guide receptacles (16) for corresponding mating formations on the covering cap (15).

6. Roof rails according to at least one of Claims 1 to 5, characterized in that the covering cap (15) is designed as an injection-molded plastic part

7. Roof rails according to at least one of Claims 1 to 6, characterized in that the covering cap (15) has a molded-on clip pin (18) which can be clipped into a hole (19) provided in the strut (1).

## Revendications

1. Rail de toit pour véhicules avec un longeron (1) tubulaire s'étendant à distance et essentiellement parallèlement à la face du toit le long d'un cadre latéral du toit, caractérisé en ce que le longeron (1) est pourvu d'une partie incurvée (2) à chacune de ses zones d'extrémité et présente des extrémités libres, qui sont en plan parallèles à la face du toit (3), en ce que dans chaque extrémité libre du longeron est introduit un élément rapporté (4) s'appuyant sur la paroi intérieure du longeron (1), auquel un élément adaptateur (6) est fixé au moyen d'éléments de fixation (7) traversant la paroi du longeron, tout en mettant sous contrainte la paroi du longeron, en ce que l'élément adaptateur (6) est muni de tiges filetées (9) pour la fixation du rail de toit au toit du véhicule et en ce que l'extrémité libre du longeron est entourée par une coiffe de recouvrement (15), qui s'étend autour de l'élément adaptateur (6) et essentiellement sur la partie incurvée (2) du longeron (1).

2. Rail de toit suivant la revendication 1, caractérisé en ce qu'une zone d'extrémité (5) d'un élément rapporté (4) et une zone d'extrémité d'un élément adaptateur (6) se joignent en une disposition avec recouvrement dans chacune des extrémités ouvertes du longeron et en ce qu'une des tiges filetées (9) prévues pour la fixation du rail de toit est disposée dans la zone de recouvrement et est assemblée à celle-ci au moyen d'un écrou fileté (14).

3. Rail de toit suivant la revendication 1 ou 2, caractérisé en ce que l'élément adaptateur (6) présente un retrait (11) sensiblement en forme de U avec un fond (12) orienté vers la face du toit (3), qui se trouve à la même hauteur que la zone d'extrémité (13) de celui-ci débouchant dans l'extrémité ouverte du longeron et qui porte une tige filetée (9) servant à la fixation du rail de toit.

4. Rail de toit suivant au moins l'une des revendications 1 à 3, caractérisé en ce que l'élément rapporté (4) est constitué par une pièce en tôle pliée, tout comme l'élément adaptateur (6).

5. Rail de toit suivant au moins l'une des revendications 1 à 4, caractérisé en ce que des saillies de guidage ou des creux de guidage (16) sont disposés sur l'élément adaptateur (6), pour des profils opposés correspondants sur la coiffe de recouvrement (15).

6. Rail de toit suivant au moins l'une des revendications 1 à 5, caractérisé en ce que la coiffe de recouvrement (15) est constituée par une pièce en matière plastique moulée par injection.

7. Rail de toit suivant au moins l'une des revendications 1 à 6, caractérisé en ce que la coiffe de recouvrement (15) présente un picot de clipsage (18) préformé, à clipser dans un trou (19) prévu dans le longeron (1).
